(19) Europäisches Patentamt

European Patent Office

Office européen des brevets

(11) EP 0 670 462 B1

(12) FASCICULE DE BREVET EUROPEEN

(45) Date de publication et mention
de la délivrance du brevet:
**12.11.1997 Bulletin 1997/46**

(51) Int Cl.⁶: **F25D 17/02**, F25B 1/00

(21) Numéro de dépôt: **95420056.4**

(22) Date de dépôt: **03.03.1995**

(54) **Ensemble de distribution et/ou collection de froid et/ou de chaud**

Kälte und/oder Wärme-Verteil- und/oder Sammeleinheit

Unit for distributing and/or collecting cold and/or warmth

(84) Etats contractants désignés:
**AT BE CH DE DK ES FR GB GR IE IT LI LU MC NL PT SE**
Etats d'extension désignés:
**SI**

(30) Priorité: **04.03.1994 FR 9402734**

(43) Date de publication de la demande:
**06.09.1995 Bulletin 1995/36**

(73) Titulaires:
• **MC INTERNATIONAL**
  **F-78140 Velizy Villacoublay (FR)**
• **Laude-Bousquet, Adrien**
  **F-69480 Anse (FR)**

(72) Inventeur: **Laude-Bousquet, Adrien**
**F-69480 Anse (FR)**

(74) Mandataire: **Guerre, Dominique et al**
**Cabinet Germain et Maureau,**
**12, rue Boileau,**
**BP 6153**
**69466 Lyon Cedex 06 (FR)**

(56) Documents cités:
**EP-A- 0 427 648**      **FR-A- 920 091**
**US-A- 4 483 152**

**Description**

La présente invention concerne de manière générale le transfert thermique, à savoir la distribution et/ou collection de frigories et/ou de calories, dans différents locaux ou installations, industriels ou commerciaux, mais aussi dans des immeubles d'habitation.

Conformément au document EP-A-0 427 648, on a déjà décrit et proposé un tel ensemble, comprenant, de manière générale :

a) un échangeur principal de chaleur entre, d'une part au moins un fluide frigorigène en cours de vaporisation, et d'autre part un fluide de transfert thermique, par exemple de l'eau avec de l'alcool, sous forme liquide, mais aussi sous forme diphasique, comprenant dans ce cas une phase liquide et une phase solide, en mélange suffisamment homogène, par exemple sous la forme d'un sorbet ou d'une purée de glace, pour être directement pompé ;
b) un moyen de production de froid comprenant au moins une boucle frigorifique, constituée de manière traditionnelle par un compresseur d'un fluide frigorigène en phase gazeuse, un moyen de condensation ou condenseur du fluide frigorigène comprimé, un moyen d'échange thermique entre le fluide frigorigène condensé et le fluide de transfert thermique, ceci dans l'échangeur principal, et le compresseur aspirant le fluide frigorigène vaporisé ;
c) un circuit principal, fermé sur lui-même, de libre circulation en continu du fluide de transfert thermique, incluant ou branché directement ou indirectement sur l'échangeur principal précité ; ce circuit comprend pour l'essentiel, un conduit de circulation du fluide de transfert thermique, ainsi que différentes vannes de contrôle dudit fluide ; par ailleurs, le circuit principal présente une section de passage sensiblement constante, d'un bout à l'autre dudit circuit ;
d) au moins une boucle de puisage du fluide de transfert thermique, comprenant une pompe annexe de circulation dudit fluide, dont l'aspiration et le refoulement communiquent avec un même segment du circuit principal, ainsi qu'au moins un échangeur secondaire de chaleur, avec une source chaude et/ou une source froide, pour l'utilisation du fluide de transfert thermique, cet échangeur secondaire étant inclus dans ou branché, directement ou indirectement, sur la boucle de puisage.

Par "circuit principal fermé de libre circulation en continu", on entend un circuit, pour l'essentiel bouclé sur lui-même, même si, ici ou là, ce circuit est interrompu par différents organes, tels qu'une pompe, un pot de décantation ou une vanne. Ce circuit permet, en continu, une libre circulation du fluide de transfert thermique, quelle que soit sa forme physique, liquide ou diphasique homogène, essentiellement sans phase gazeuse au-dessus de lui, et sans entrave susceptible de bloquer ou limiter son débit constamment recyclé.

Par "segment" du circuit principal, on entend la caractéristique selon laquelle le piquage amont et le piquage aval d'une même boucle de puisage se trouvent, dans le sens de circulation du fluide de transfert thermique, à proximité l'un de l'autre, et non pas disposés loin de l'autre, par exemple respectivement sur une branche amont et une branche aval du circuit principal respectivement. Et le piquage aval peut être disposé en amont du piquage amont, dans le sens de circulation du fluide de transfert thermique.

Par "source chaude", ou "source froide", on entend, au sens de la thermodynamique, toute source de chaleur ou de froid, quelle que soit sa forme ou ses conditions ; il peut s'agir, par exemple, aussi bien selon l'invention d'un échangeur de chaleur, que d'une pompe à chaleur, que du condenseur d'un groupe frigorifique.

La présente invention a pour objet un ou plusieurs perfectionnements à l'ensemble de distribution et/ou collection de froid et/ou de chaud, décrits dans le document EP-A-0 427 648.

Plus précisément, l'invention a pour objet de limiter l'inertie thermique du circuit principal de circulation du fluide de transfert thermique, de manière à pouvoir réagir rapidement à des conditions de température modifiées ou variables, au niveau de l'échangeur secondaire de chaque boucle de puisage.

Conformément à la présente invention, on a trouvé que cette inertie thermique pouvait être limitée, en dimensionnant de manière particulière, et les uns par rapport aux autres, les éléments suivants, à savoir :

- la section de passage du circuit principal, compatible avec la circulation du fluide de transfert thermique, sous forme diphasique ;
- la puissance frigorifique maximum du moyen de production de froid ;
- et l'échangeur principal, pour l'échange thermique entre le fluide frigorigène et le fluide de transfert thermique.

Selon la présente invention, on a découvert que l'inertie thermique pouvait être limitée, si le dimensionnement des éléments précités permettait de respecter en fonctionnement froid, approximativement, la relation suivante :

$$P_{Max} = d \times c \times \Delta T$$

dans laquelle :

- $P_{Max}$ est la puissance frigorifique maximum du moyen de production de froid, exprimée en W ;
- d est le débit massique du fluide de transfert thermique, sous forme liquide, exprimé en kg/s, occupant toute la section de passage, c'est-à-dire sans vide d'air, du circuit principal de transfert thermique ;

- c est la chaleur massique sensible et/ou latente du fluide de transfert thermique, sous forme liquide, exprimée en J/kg/°K ;
- ΔT est l'écart de température du fluide de transfert thermique, sous forme liquide, entre la sortie et l'entrée de l'échangeur principal, exprimée en °K.

Le respect de la relation précitée permet de limiter au minimum la charge de fluide de transfert thermique dans le circuit principal, par exemple en écrêtant les pointes de consommation frigorifique, par un stockage du fluide de transfert thermique sous forme diphasique, communiquant avec le circuit principal, ce stockage étant alimenté pendant les périodes de faible consommation frigorifique, et soutiré pendant les périodes de forte consommation frigorifique.

Comme montré ci-après, le respect de cette relation permet aussi de passer rapidement, d'un régime de production de froid à un régime de production de chaud, par exemple pour le dégivrage du circuit principal et/ou de chaque boucle de puisage.

La présente invention est maintenant décrite par référence au dessin annexé, dans lequel :

- la figure 1 représente, de manière schématique, le moyen de production de froid d'un ensemble selon l'invention ;
- la figure 2 représente, de manière schématique, un réservoir contrôlé de fluide frigorigène, appartenant au moyen de production de froid selon figure 1 ;
- la figure 3 est un schéma d'ensemble du circuit principal de circulation selon l'invention, avec plusieurs boucles de puisage, branchées sur ledit circuit ;
- la figure 4 représente une variante d'un ensemble de transfert thermique selon l'invention, dans le cadre d'un supermarché ;
- la figure 5 représente une autre variante d'un ensemble de transfert thermique selon l'invention.

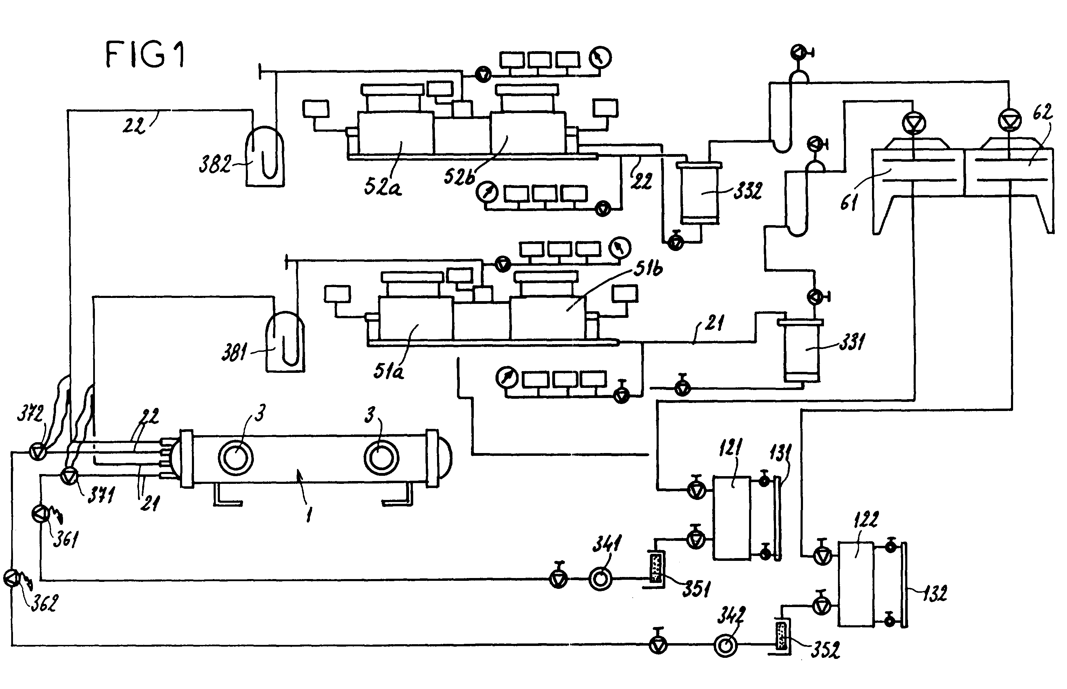

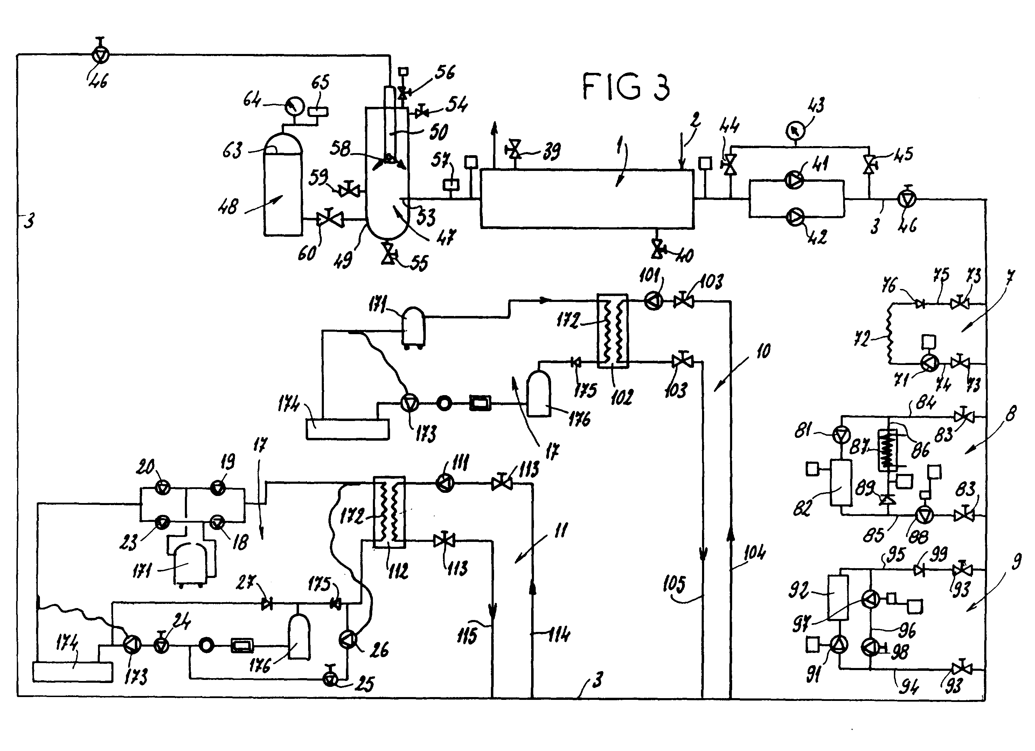

Conformément aux figures 1 et 3, un ensemble selon l'invention, pour la distribution et/ou collection de froid et/ou de chaud comprend, de manière générale :

a) un échangeur principal 1 de chaleur, entre d'une part deux fluides frigorigènes 21 et 22, représentés collectivement sous la référence 2 à la figure 3, en cours de vaporisation, et d'autre part un fluide 3 de transfert thermique, par exemple de l'eau avec de l'alcool, pouvant être selon le régime de fonctionnement de l'ensemble, sous forme diphasique, c'est-à-dire en mélange homogène d'une phase liquide et d'une phase solide, permettant son pompage ;
(b) un moyen de production de froid, plus particulièrement représenté à la figure 1, comprenant deux boucles frigorifiques 21 et 22, comprenant chacune un compresseur 51 ou 52, constitué chacun par deux moto-compresseurs 51a, 51b, ou 52a, 52b, un moyen de condensation ou condenseur 61 ou 62 du fluide frigorigène comprimé, un moyen d'échange thermique, du type échangeur à plaques ou multi-tubulaires, entre le fluide frigorigène condensé et le fluide de transfert thermique précité, compris dans l'échangeur principal 1, le compresseur 51 ou 52 aspirant le fluide frigorigène vaporisé ;
(c) un circuit principal 3 fermé, de libre circulation en continu, du fluide de transfert thermique, incluant, ou branché, directement ou indirectement, sur l'échangeur principal 1, comprenant deux pompes principales 41 et 42, en parallèle, de circulation du fluide de transfert thermique, ce circuit étant constitué de tuyaux assemblés les uns aux autres, présentant une section de passage sensiblement constante, d'un bout à l'autre dudit circuit ;
(d) cinq boucles de puisage 7 à 11 du fluide de transfert thermique, comprenant chacune une pompe annexe 71, 81, 91, 101, ou 111, de circulation dudit fluide, dont l'aspiration et le refoulement communiquent avec un même segment du circuit principal 3, ainsi qu'au moins un échangeur secondaire, 72, 82, 92, 102, ou 112, avec une source chaude et/ou une source froide selon les utilisations ou le régime de circulation du fluide de transfert thermique, cet échangeur secondaire étant inclus dans ou branché, directement ou indirectement, sur la boucle de puisage.

On précisera ci-après, l'agencement et le fonctionnement, successivement du moyen de production de froid présenté à la figure 1, du circuit 3 de circulation du fluide de transfert thermique, et de chacune des boucles 7 à 11 de puisage.

Conformément à la figure 1, le moyen de production frigorifique présente encore les caractéristiques et spécificités suivantes.

Les deux boucles frigorifiques 21 et 22 sont indépendantes l'une de l'autre, et disposées en parallèle, avec respectivement deux moyens de condensation 61 et 62, rassemblés ou non dans un même condenseur, et respectivement deux moyens d'échange thermique, chacun entre le fluide 3 de transfert thermique et le fluide frigorigène 21 ou 22, rassemblés ou non dans le même échangeur principal 1, selon deux passages respectivement distincts.

Chaque boucle frigorifique 21 ou 22 comprend en outre :

- un séparateur d'huile 331 ou 332 ;
- un réservoir 121 ou 122 de stockage intermédiaire du fluide frigorigène condensé, associé à un conduit de contrôle 131 ou 132 dudit fluide frigorigène ;
- un déshydrateur 351 ou 352, et un voyant liquide 341 ou 342, une vanne électro-magnétique 361 ou 362 ;
- un détendeur thermostatique 371 ou 372, en amont de l'échangeur principal 1, comportant dans le cas présent deux circuits indépendants correspondant aux deux fluides frigorigènes 21 et 22 respectivement ;

- et une bouteille anti-coups de liquide 381 ou 382, avec ou sans échangeur de chaleur incorporé.

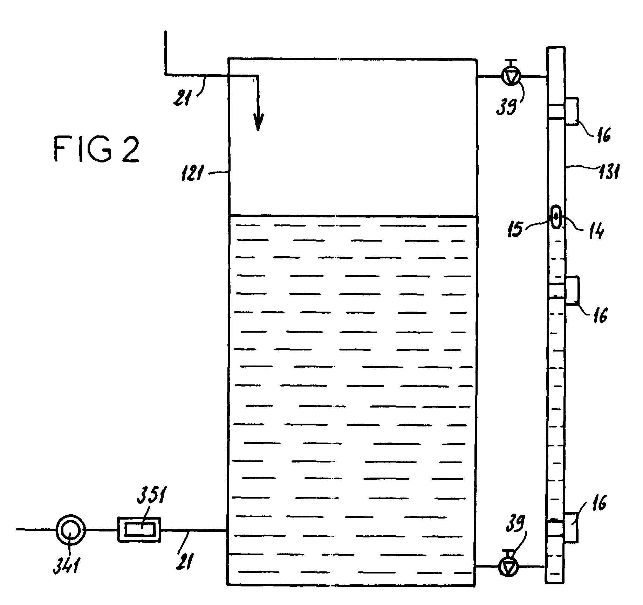

Conformément à la figure 2, on a représenté plus particulièrement le réservoir 121 de stockage intermédiaire de la boucle frigorifique 21, lequel est associé à des moyens permettant de contrôler la marche ou le régime de fonctionnement du compresseur 51 et/ou du compresseur 52, qui comprennent le conduit de contrôle 131, disposé verticalement ou incliné par rapport à la verticale, et branché en parallèle sur le réservoir 121.

Un flotteur 14 est monté de manière mobile à l'intérieur du conduit 131, pour suivre le niveau du fluide frigorigène dans ledit conduit. Ce flotteur 14 comporte un moyen physique 15 de détection ou identification, consistant en un aimant permanent noyé dans l'enveloppe en matière plastique du flotteur 14. En correspondance avec le flotteur 15, plusieurs détecteurs 16, comprenant chacun un contact électrique bi-stable, sont disposés et situés à l'extérieur du conduit de contrôle 131, à des hauteurs ou niveaux différents. Le conduit de contrôle 131 peut, par ailleurs, être isolé du réservoir de stockage intermédiaire 121 par des vannes 39.

Le conduit de contrôle 131 étant constitué par un matériau non magnétique, par exemple du cuivre, et les vannes 39 étant ouvertes, toute variation du niveau du fluide frigorigène dans le réservoir 121 provoque le déplacement du flotteur 14 dans le conduit de contrôle 131, devant un ou plusieurs détecteurs 16, avec des contacts bi-stables, ce qui génère, par inversion du contact électrique, un ou plusieurs signaux de sortie.

Les détecteurs 16 peuvent être placés à n'importe quel endroit du conduit de contrôle 131, et ils peuvent être distribués selon la hauteur dudit conduit. Comme le niveau du fluide frigorigène dans le réservoir 121 est fonction de la pression d'évaporation, de la pression de condensation, du nombre de compresseurs 51 et 52 en fonctionnement, et de la température extérieure, le niveau du fluide frigorigène dans le réservoir 121 fluctue. En correspondance avec ces fluctuations, différents seuils d'alarme ou de contrôle, de prévention ou de correction, peuvent être obtenus en plaçant de manière appropriée un nombre adéquat de détecteurs 16, selon la hauteur du conduit 131. Bien entendu, tous ces signaux de sortie peuvent être traités dans tous moyens appropriés, tels que calculateur ou micro-ordinateur, selon toute logique préétablie de contrôle de la boucle frigorifique 21, et/ou de la boucle frigorifique 22.

Le circuit principal 3 de circulation du fluide de transfert thermique est refermé sur lui-même, et constitué pour l'essentiel par l'assemblage de conduits ou tuyaux reliés les uns aux autres de manière étanche, tout en demeurant compatibles avec des dilatations ou contractions différentielles des tuyaux les uns par rapport aux autres, compte tenu des variations de température du fluide de transfert thermique. Ce circuit comprend, en suivant le sens de circulation dudit fluide :

- l'échangeur principal 1, avec une vanne de purge 39 d'air, et une vanne de vidange totale 40 ;
- deux pompes jumelles 41 et 42, assurant chacune la circulation de la totalité du débit du fluide de transfert thermique ; elles sont mises en service par alternance, et sont automatisées, de telle façon qu'en cas de défaillance de l'une, l'autre prenne automatiquement le relai ;
- un manomètre 43, raccordé par deux vannes 44 et 45, en amont et en aval des deux pompes 41 et 42 ;
- deux vannes à main 46, permettant d'isoler l'ensemble constitué par les deux pompes 41 et 42, l'échangeur principal 1, le dégazeur-décanteur 47 et la capacité d'ajustement 48, décrits ci-après, ceci pour intervention ;
- un détecteur de débit 57, permettant de contrôler le débit du fluide de transfert thermique.

L'ensemble représenté par le dégazeur-décanteur 47 et la capacité 48 d'ajustement, en amont de l'échangeur principal 1, permet :

- le dégivrage correct de l'installation ;
- la décantation du fluide de transfert thermique ;
- le complément dudit fluide ;
- la régulation de la puissance frigorifique ou calorifique et des séquences de dégivrage.

Le dégazeur-décanteur 47, disposé en amont de l'échangeur principal 1, comprend de manière générale, un réservoir 49 d'extension verticale, avec une tube 50 d'arrivée du fluide de transfert thermique, plongeant jusqu'à un niveau intermédiaire du réservoir, une extraction 53 du fluide de transfert thermique, au-dessous de l'extrémité du tube d'arrivée 50, une vanne inférieure 55 de soutirage des particules solides lourdes, une vanne supérieure 54 d'extraction des particules solides légères, notamment sous forme de boues, et une vanne 56 de dégazage.

Le diamètre intérieur du réservoir 49 est déterminé de façon à diminuer de manière importante la vitesse du fluide de transfert thermique, pour obtenir une séparation fiable des particules solides, lourdes ou légères, ainsi que de la phase gazeuse, par rapport au fluide de transfert thermique, retournant vers l'échangeur principal 1. Le tube 50 plonge dans le réservoir 49 sur une profondeur suffisante, et est obturé par un bouchon, empêchant le fluide d'aller directement vers le fond du réservoir 49. Des orifices sont percés au bas du tube 50 pour l'évacuation du fluide de transfert thermique. La distance entre l'extraction 53 et le fond du réservoir 49 permet une bonne décantation des particules solides qui peuvent être vidangées par la vanne inférieure 55. La vanne supérieure 54 permet quant à elle, la purge des boues ou des particules légères. La vanne de dégazage 56 peut être équipée d'un purgeur automatique. Et une vanne 59 sur le réservoir 49 permet de compléter la charge en fluide de transfert thermique.

Une vanne 60 permet de raccorder le dégazeur-décanteur 47, et partant le circuit principal 3, à une capacité 48 d'ajustement du fluide de transfert thermique. Cette capacité permet de compléter le circuit, de façon automatique, en dit fluide. Elle comprend à sa partie supérieure, une membrane souple 63 pressurisée, qui permet d'absorber les variations de volume en fonction des variations de température du fluide de transfert thermique. En haut de la capacité, la poche d'air ou gazeuse au-dessus de la membrane 63 est portée à une pression contrôlée en permanence par un manomètre 64, avec un pressostat 65. Ce dernier déclenche une alarme en cas de chute de pression trop importante, provoquée par exemple par une fuite sur le circuit 3.

De manière commune, chaque boucle de puisage 7 à 11 comprend :

- une branche amont 74, 84, 94, 104 ou 114, et une branche aval 75, 85, 95, 105 ou 115, de part et d'autre de l'échangeur secondaire 72, 82, 92, 102, ou 112 ;
- la pompe annexe, 71, 81, 91, 101, ou 111, située sur l'une de ces branches ;
- deux vannes d'arrêt 73, 83, 93, 103, ou 113, permettant d'isoler chaque boucle de puisage par rapport au circuit principal 3.

La boucle de puisage 7 permet de refroidir une chambre froide ou une cuve d'eau, l'échangeur thermique 72 étant disposé dans une enceinte non représentée. La pompe 71 est pilotée par un thermostat contrôlant la température du milieu à refroidir ou à réchauffer. Le piquage aval sur le circuit 3 est disposé en amont du piquage amont de la boucle 7 sur le même circuit. Un clapet anti-retour 76 est disposé sur la boucle de puisage, notamment sur sa branche aval 75, pour interdire tout passage du fluide de transfert thermique de la branche aval 75 vers la branche amont 74. Ce clapet permet de supprimer tout courant parasite dans l'échangeur 72, puisqu'à l'arrêt de la pompe 71, la pression dans la branche aval 75 est supérieure à la pression au niveau de la pompe 71. Grâce à cette disposition particulière, on peut réguler de manière fiable la température ambiante dans l'enceinte précitée, à refroidir ou à réchauffer, ceci par simple commande de la pompe 71 avec un thermostat ; il n'existe pas de courant parasite dans la boucle 7, à l'arrêt de la pompe 71.

La boucle de puisage 8 permet, non seulement de réfrigérer une enceinte, par exemple dans une zone de température comprise entre - 1° et + 1°, mais également de dégivrer l'échangeur 82, en totale indépendance par rapport à la circulation du fluide de transfert thermique dans le circuit principal 3.

A cet effet, la boucle 8 de puisage comprend :

- une branche 86 de dérivation entre les branches amont 84 et aval 85, avec un réchauffeur 87 sur ladite branche ;
- une vanne de fermeture 88 sur la partie de la branche aval 85, en aval de la jonction entre la branche de dérivation 86 et la branche aval 85 ;
- un clapet 89 situé sur la branche 86 de dérivation, en amont du réchauffeur 87, ce clapet assurant le passage du fluide de transfert thermique, uniquement lorsque la vanne de fermeture 88 est fermée, de manière partielle ou totale ; un thermostat d'ambiance non représenté commande simultanément l'arrêt de la pompe 81 et la fermeture de la vanne 88.

Pendant le dégivrage, la pompe 81 est mise en marche forcée, la vanne 88 est mise en fermeture, et le réchauffeur 87 est mis en fonctionnement. Un thermostat situé en amont du réchauffeur 87 régule la température de ce dernier. La fin du dégivrage sera détectée par un thermostat non représenté, dont le bulbe est placé sur la surface externe de l'échangeur secondaire 82, par exemple dans les ailettes de ce dernier.

En marche normale, le clapet 89 empêche toute circulation dans le réchauffeur 87, quand la vanne 88 est ouverte et quand la pompe 81 est en fonctionnement.

La vanne 88 peut être une vanne proportionnelle, qui sous l'action d'un thermostat permet de réguler la quantité de fluide de transfert thermique dérivé du circuit principal 3 vers la branche 86 de dérivation, ceci dans le but de réguler la température dans l'échangeur secondaire 82.

La boucle de puisage 9 permet aussi de réfrigérer une enceinte, où il est souhaitable, soit de maintenir une hygrométrie relativement élevée, soit une température de soufflage pas trop basse. Dans ce cas, comme pour la boucle de puisage 7, mais à la différence de la boucle de puisage 8, le piquage aval est situé en amont du piquage amont, selon le sens de circulation du fluide de transfert thermique. La boucle 9 comporte une branche 96 de dérivation, entre les branches amont 94 et aval 95, avec une vanne 97 de dérivation contrôlée sur ladite branche.

La température dans l'enceinte à réfrigérer est gérée par un thermostat contrôlant la marche ou l'arrêt de la pompe 91. Un clapet 99, équivalent au clapet 76 empêche tout courant parasite, lors de l'arrêt de la pompe 91. La vanne 97 est régie par un régulateur pouvant être piloté, soit par la température de soufflage (par exemple la température d'un local où travaille du personnel), soit par l'hygrométrie ambiante de l'enceinte à refroidir.

Les boucles de puisage 10 et 11 sont associées en cascade à un circuit 17 de réfrigération en froid négatif, pour obtenir des températures relativement basses, par exemple de l'ordre de -20 à -40°, pour refroidir notamment des chambres de conservation de produits surgelés ou des vitrines d'exposition desdits produits. Dans ce cas, les échangeurs 102 et 112 peuvent être des échangeurs à plaques ou coaxiaux, ou encore des échangeurs multi-tubulaires, alimentés par les pompes 101 et 111.

Le circuit de réfrigération en froid négatif comprend :

- un compresseur 171 à fort volume balayé et de faible puissance moteur, puisque dans ce cas la basse pression est relativement faible et la pression de refoulement relativement basse ;
- un condenseur 172 situé dans l'échangeur secondaire 102 ou 112 ;
- un détendeur 173 ;
- un évaporateur 174 ;
- et une bouteille 176 de stockage du fluide frigorigène dans le circuit 17.

De manière importante, le circuit de réfrigération 17 en froid négatif comprend un clapet 175 empêchant tout retour de fluide frigorigène vers le condenseur 172. En effet, ce clapet 175 empêche le fluide frigorigène de revenir dans l'échangeur 102 ou 112 et de l'engorger complètement, ce qui provoquerait une double réaction au démarrage du compresseur 171, d'une part par une augmentation de la haute pression du côté du refoulement, et d'autre part par une chute de la basse pression, par défaut d'alimentation du détendeur 173 en fluide frigorigène.

Le circuit de réfrigération 17 en froid négatif, associé à la boucle de puisage 11, comprend des moyens d'inversion, consistant en des vannes 18, 19, 20, 23, dont la manoeuvre sera expliquée ci-après, permettant d'inverser la circulation du fluide frigorigène dans le circuit 17, c'est-à-dire pour faire fonctionner, au moment du dégivrage, l'évaporateur 174 en condenseur, et le condenseur 172 en évaporateur, ce dernier en échange de chaleur avec le fluide 3 de transfert thermique puisé. En marche normale, les vannes 19 et 23 sont ouvertes, tandis que les vannes 18 et 20 sont fermées, pour envoyer la haute pression dans le condenseur 172. Du côté de la basse pression, en marche normale, et les deux clapets 175 et 27, ayant des sens d'ouverture respectivement contraires, permettent le passage du fluide frigorigène condensé vers la vanne de détente 173, et interdisent le passage de ce même fluide directement vers l'évaporateur 174.

Pour une intervention de dépannage ou d'entretien, la fermeture des vannes 24 et 25 permet de récupérer le fluide frigorigène en phase liquide dans la bouteille 176.

En dégivrage, les vannes 19 et 23 sont fermées, et les vannes 18 et 20 sont ouvertes, de telle sorte que le fluide frigorigène comprimé est dirigé vers l'évaporateur 174 jouant le rôle de condenseur. Le fluide condensé passe alors par le clapet 27, le clapet 175 étant fermé vers la bouteille 176, puis par le détendeur 26, jusqu'au condenseur 172, jouant le rôle d'évaporateur. Ainsi, pendant la phase de dégivrage du circuit de réfrigération 17 en froid négatif, en indépendance avec la circulation en continu du fluide de transfert thermique, ce dernier bénéficie d'un apport en frigories, par l'intermédiaire de la boucle de puisage 11.

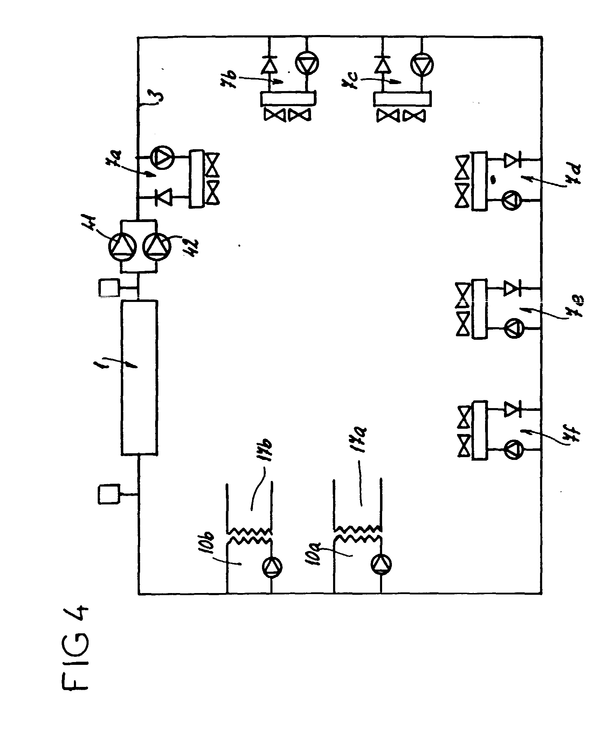

La figure 4 montre une application pratique de l'ensemble ou installation décrit à la figure 3, dans le cas d'un local commercial du type supermarché, pour lequel les besoins en froid sont en général étagés en températures selon les postes ou utilisations concernées. En conséquence, conformément à la figure 4, on prévoit de manière étagée par exemple cinq boucles de puisage 7a à 7f, de niveaux de températures de fonctionnement de leurs échangeurs secondaires, respectivement croissants, dans le sens de circulation du fluide de transfert thermique de l'extrémité froide à l'extrémité chaude de l'échangeur principal 1 ; les échangeurs secondaires de ces boucles de puisage respectivement peuvent être dans des vitrines ou chambres froides, en général ventilées.

Ainsi :

- la boucle de puisage 7a correspond à une chambre froide affectée aux produits de boucherie ou de poissonnerie ;
- la boucle 7b à une vitrine de produits de boucherie ;
- la boucle 7c à une chambre froide ou une vitrine de charcuterie ;
- la boucle 7d à une chambre froide ou vitrine pour fruits et légumes ;
- et les boucles 7e et 7f à des laboratoires.

Deux boucles de puisage 10a et 10b sont affectées en cascade à des circuits de réfrigération en froid négatif 17a et 17b respectivement, par exemple pour la conservation des produits surgelés.

Un ensemble conforme à la figure 4 est dégivré de la manière suivante :

- arrêt complet des apports frigorifiques, et notamment du moyen de production de froid selon figure 1 ;
- mise en route simultanée, en marche forcée, de toutes les pompes des boucles de puisage ;
- et s'agissant des circuits de réfrigération 17a et 17b, mise en route de leur phase de dégivrage, telle que décrite précédemment, par référence à la boucle de puisage 11.

Dans ces conditions, la température du fluide de transfert thermique s'élève progressivement dans le circuit 3, grâce à l'apport thermique de l'ensemble des boucles de puisage. Quand on détecte à la sortie de l'échangeur principal 1, une température de l'ordre de 0° C, on arrête les ventilations sur les boucles 7a et 7b, les pompes desdites boucles restant toujours en fonctionnement. Quand cette même température passe à une valeur de plus de 2° C, on arrête la ventilation sur les boucles 7c, et ainsi de suite jusqu'à obtenir en sortie d'échangeur 1, une température de l'ordre de 5 à 7°C.

Grâce à la faible inertie thermique du circuit de circulation 3, cette phase de dégivrage est limitée dans le temps, tandis que la descente en température de l'ensemble, une fois le dégivrage terminé, peut être rapide.

Cette procédure de dégivrage peut être généralisée à tout ensemble de distribution et/ou collection de chaud et/ou de froid, traditionnel, comprenant :

- un circuit principal, branché sur un réservoir du fluide de transfert thermique, de circulation en continu dudit fluide, comprenant une branche amont sous haute pression et une branche aval sous basse pression, séparées par une vanne de détente ;

- et des boucles de puisage, limitées chacune, sans pompe annexe, à un simple échangeur secondaire disposé entre la branche amont et la branche aval du circuit principal.

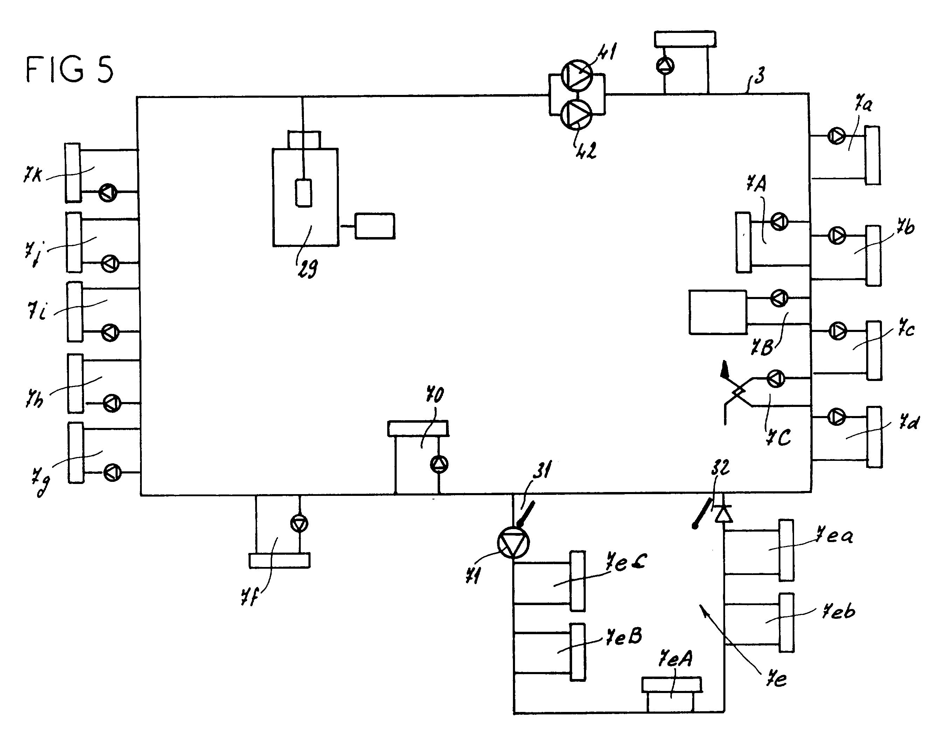

Conformément à la figure 5, on utilise un ensemble thermique selon l'invention pour générer et/ou consommer du froid et/ou du chaud.

Conformément à la représentation de la figure 5, les postes utilisateurs ou consommateurs de froid et/ou de chaud, avec leurs boucles de puisage respectives, sont situés à l'extérieur du circuit principal 3, tandis que les postes générateurs de froid et/ou de chaud, avec leurs boucles de puisage respectives, sont situés à l'intérieur du circuit 3.

Les postes utilisateurs ou consommateurs, et leurs boucles respectives 7a à 7d, et 7g à 7k, sont par exemple des pompes à chaleur ou des groupes frigorifiques.

Les postes générateurs, et leurs boucles de puisage respectives 7A à 7D, sont par exemple des pompes à chaleur, des chaudières, des groupes d'eau glacée.

Dans ce cas, un réservoir 29 de stockage du fluide de transfert thermique, sous forme diphasique homogène, peut être branché sur le circuit 3, pour stocker des frigories sous la forme du fluide diphasique, pendant les périodes de faible consommation frigorifique, et les déstocker vers le circuit 3, pendant les périodes de forte consommation frigorifique, grâce à la faible inertie thermique du circuit principal 3, conformément à l'invention.

La boucle de puisage 7e, représentée à l'extérieur du circuit principal 3, présente la caractéristique selon laquelle elle est elle-même associée à des boucles de puisage annexe, les unes consommatrices de froid et/ou de chaud, référencées 7ea, et 7eb, et les autres productrices ou génératrices de froid et/ou de chaud, référencées 7eA, 7eB, et 7eC.

Vis-à-vis du circuit principal 3, deux capteurs de température 31 et 32 sont associés respectivement à l'entrée et à la sortie de la boucle de puisage 7e, pour déterminer, à partir d'un débit constant fixé par la pompe 71, la quantité de froid et/ou de chaud prélevée ou restituée au circuit principal 3 de transfert thermique.

L'application représentée à la figure 5, présente les avantages déterminants suivants :

- une fois le circuit principal 3 installé, on peut à tout moment, y compris après l'installation, lui adjoindre des boucles supplémentaires de puisage, le renforçant en chaud ou en froid, en n'importe quel point ;
- l'installation permet un foisonnement thermique permanent, correspondant aux apports en chaud ou en froid variables des différentes boucles de puisage, ceci avec un excellent bilan énergétique ;
- les différents postes utilisateurs ou consommateurs, ou producteurs de chaud et/ou de froid peuvent être avantageusement répartis le long du circuit principal, selon leurs niveaux de puissance thermique et de températures de fonctionnement.

S'agissant de la production d'énergie thermique, avantageusement et à titre d'exemple, les boucles de puisage 7A à 7D peuvent être, par exemple, un groupe d'eau glacée, une chaudière, un échangeur à plaques sur un circuit de chauffage urbain, et une pompe à chaleur réversible.

Pour terminer, le stockage 29 du fluide de transfert thermique sous forme diphasique, communiquant avec le circuit principal 3, permet de sous-dimensionner de manière importante, dans la proportion de 50 à 70 %, ledit circuit principal, par rapport à une mise en oeuvre du même fluide, sous forme monophasique liquide, sans pénaliser les performances de ce même circuit, grâce à sa faible inertie thermique.

La température de fonctionnement du circuit principal 3, c'est-à-dire la température moyenne du fluide de tranfert thermique, peuvent être optimisées en fonction des saisons et des postes d'utilisation. Ainsi, l'hiver, grâce à une température du fluide de transfert thermique de l'ordre de 25 °C, le rendement des pompes à chaleur sera maximum. L'été, en maintenant le même fluide à 15° C, on obtiendra un excellent rendement frigorifique pour les groupes de froid et les pompes à chaleur fonctionnant alors en réfrigération des locaux.

## Revendications

1. Ensemble de distribution et/ou collection de froid et/ou de chaud, comprenant :

   a) un échangeur principal (1) de chaleur entre, d'une part un fluide frigorigène (2,21,22) en cours de vaporisation, et d'autre part un fluide (3) de transfert thermique, notamment un fluide diphasique comprenant une phase liquide et une phase solide, en mélange suffisamment homogène pour être directement pompée (41,42) ;

   b) un moyen de production de froid comprenant au moins une boucle frigorifique (21,22) comprenant un compresseur (51,52) du fluide frigorigène en phase gazeuse, un moyen de condensation (61,62) du fluide frigorigène comprimé, un moyen d'échange thermique entre le fluide frigorigène condensé et le fluide de transfert thermique, compris dans l'échangeur principal (1), le compresseur (51,52) aspirant le fluide frigorigène vaporisé ;

c) un circuit principal fermé (3) de libre circulation en continu du fluide de transfert thermique, incluant ou branché sur l'échangeur principal (1), comprenant au moins une pompe principale (41,42) de circulation dudit fluide de transfert thermique, ledit circuit présentant une section de passage sensiblement constante, d'un bout à l'autre dudit circuit ;

d) au moins une boucle de puisage (7 à 11) du fluide de transfert thermique, comprenant une pompe annexe (71,81,91,101,111) de circulation dudit fluide de transfert thermique, dont l'aspiration et le refoulement communiquent avec un même segment du circuit principal (3), ainsi qu'au moins un échangeur secondaire (72,82,92,102,112) de chaleur avec une source chaude et/ou froide, pour l'utilisation du fluide de transfert thermique, inclus dans ou branché sur la boucle de puisage ;

**caractérisé en ce que** la section de passage du circuit principal (3), compatible avec la forme diphasique du fluide de transfert thermique, la puissance frigorifique maximum du moyen de production de froid, Pmax, exprimée en W, et l'échangeur principal (1) de chaleur sont dimensionnés les uns par rapport aux autres pour satisfaire, en fonctionnement froid, approximativement à la relation :

$$P_{Max} = d \times c \times \Delta T$$

dans laquelle :

- d est le débit massique du fluide de transfert thermique, sous forme liquide, exprimé en kg/s, occupant toute la section de passage du circuit principal (3) de transfert thermique ;
- c est la chaleur massique du fluide de transfert thermique, sous forme liquide, exprimée en J/kg/°K
- $\Delta T$ est l'écart de température du fluide de transfert thermique, sous forme liquide, entre la sortie et l'entrée de l'échangeur principal (1).

2. Ensemble selon la revendication 1, caractérisé en ce que le moyen de production de froid comprend deux boucles frigorifiques (21,22), indépendantes et parallèles, avec respectivement deux moyens de condensation (61,62), éventuellement rassemblés dans un même condenseur, et deux moyens d'échange thermique, chacun entre le fluide (3) de transfert thermique et le fluide frigorigène (21,22), rassemblés dans le même échangeur principal (1), selon deux passages respectivement distincts.

3. Ensemble selon la revendication 1, caractérisé en ce qu'au moins une boucle frigorifique (21,22) comprend un réservoir de stockage (121,122) intermédiaire du fluide frigorigène condensé, associé à des moyens de contrôle du compresseur (51,52), comprenant un conduit de contrôle (131,132) disposé verticalement ou incliné par rapport à la verticale, branché en parallèle sur ledit réservoir, un flotteur mobile (14) à l'intérieur du conduit en suivant le niveau du fluide frigorigène dans ce dernier, comportant un moyen (15) physique de détection, et au moins un détecteur (16) du flotteur situé à l'extérieur du conduit de contrôle, dont le signal de sortie sert au contrôle du compresseur.

4. Ensemble selon la revendication 1, caractérisé en ce qu'une boucle (8) de puisage du fluide de transfert thermique, notamment pour la réfrigération d'une enceinte, comprend :

- une branche amont (84) et une branche aval (85), de part et d'autre de l'échangeur secondaire (82), avec la pompe annexe (81) sur l'une de ces branches ;
- une branche (86) de dérivation entre les branches amont et aval, avec un réchauffeur (87) sur ladite branche ;
- une vanne de fermeture (88) sur la partie de la branche aval, en aval de la jonction entre la branche (86) de dérivation et la branche aval (85) ;
- un clapet (89) situé sur la branche de dérivation, en amont du réchauffeur, assurant le passage du fluide de transfert thermique, uniquement lorsque la vanne de fermeture (88) est fermée.

5. Ensemble selon la revendication 1, caractérisé en ce qu'une boucle (9) de puisage du fluide de transfert thermique, notamment pour la réfrigération contrôlée d'une enceinte, comprend :

- une branche amont (94) et une branche aval (95), de part et d'autre de l'échangeur secondaire (92), avec la pompe annexe (91) sur l'une de ces branches ;
- une branche (96) de dérivation entre les branches amont et aval, avec une vanne (97) de dérivation contrôlée sur ladite branche.

6. Ensemble selon la revendication 1, caractérisé en ce qu'une boucle de puisage (10,11) du fluide de transfert thermique est associée en cascade à un circuit (17) de réfrigération en froid négatif comprenant un compresseur (171), un condenseur (172) compris dans l'échangeur secondaire (102,112), un détendeur (173) et un évaporateur (174).

7. Ensemble selon la revendication 6, caractérisé en ce que le circuit de réfrigération (17) en froid négatif comprend un clapet (175) empêchant tout retour de fluide frigorigène vers le condenseur (172).

8. Ensemble selon la revendication 6, caractérisé en ce que le circuit de réfrigération (17) en froid négatif comprend des moyens (18,19,20,23,25,26) d'inversion de la circulation du fluide frigorigène, permettant à l'évaporateur (174) de fonctionner en condenseur, et au condenseur (172) de fonctionner en évaporateur, en échange de chaleur avec le fluide (3) de transfert thermique.

9. Ensemble selon la revendication 1, caractérisé en ce que le circuit (3) de circulation du fluide de transfert thermique comprend un dégazeur-décanteur (47), disposé préférentiellement en amont de l'échangeur principal (1), comprenant un réservoir (49) d'extension verticale, avec un tube d'arrivée (50) du fluide de transfert thermique plongeant jusqu'à un niveau intermédiaire du réservoir, une extraction (53) dudit fluide au-dessous de l'extrémité du tube d'arrivée, une vanne (55) inférieure de soutirage des solides et une vanne supérieure (54) d'extraction des boues.

10. Ensemble selon la revendication 1, caractérisé en ce que le circuit (3) principal, et notamment le dégazeur-décanteur (47), communiquent avec une capacité (48) d'ajustement du fluide de transfert thermique.

11. Ensemble selon la revendication 1, caractérisé en ce qu'il comprend plusieurs boucles (7) de puisage, les unes (7A à 7D) génératrices de froid et/ou de chaud, et les autres (7a à 7k) consommatrices de froid et/ou de chaud.

12. Ensemble selon la revendication 1, caractérisé en ce que sur la même boucle de puisage (7e) sont branchées en dérivation des sources de froid (7eA à 7eC) et/ou de chaud (7ea et 7eb).

13. Ensemble selon la revendication 1, caractérisé en ce que deux capteurs (31,32) de température sont associés respectivement à l'entrée et à la sortie d'une boucle de puisage (7e), pour déterminer la quantité de froid et/ou de chaud prélevée sur le circuit principal (3) de transfert thermique.

14. Ensemble selon la revendication 1, caractérisé en ce qu'une boucle (8) de puisage du fluide de transfert thermique, notamment pour la réfrigération d'une enceinte, comprend :

- une branche amont (74) et une branche aval (75), de part et d'autre de l'échangeur secondaire (72), avec la pompe annexe (71) sur l'une de ces branches ;
- le piquage aval de la branche aval (75) étant situé en amont du piquage amont de la branche amont (74), selon le sens de circulation du fluide de transfert thermique ;
- un clapet anti-retour (76) diposé sur la boucle de puisage, notamment sur sa branche aval (75), interdisant tout passage du fluide de transfert thermique de la branche aval (75) vers la branche amont (74).

15. Procédé de dégivrage d'un ensemble selon la revendication 1, comprenant une pluralité de boucles de puisage (7 à 11) distribuées et étagées le long du circuit principal, selon des niveaux de températures de fonctionnement de leurs échangeurs secondaires (72,82,92,102,112), respectivement croissants de l'extrémité froide à l'extrémité chaude de l'échangeur principal (1), caractérisé en ce que :

- on arrête le moyen de production de froid ;
- on fait fonctionner, en marche forcée, les pompes (71,81,91,101,111) des boucles de puisage ;
- et on arrête la ventilation des boucles de puisage, successivement dans l'ordre de leur étagement de l'extrémité froide à l'extrémité chaude de l'échangeur principal, au fur et à mesure de la montée en température du fluide de transfert thermique.

**Patentansprüche**

1. Vorrichtung zum Verteilen und/oder Sammeln von Kälte und/oder Wärme, die folgendes aufweist:

a) einen Hauptwärmeaustauscher (1) zwischen einem Kältemittel (2, 21, 22) während des Verdampfens einerseits und einem Wärmeübertragungsfluid (3) andererseits, insbesondere einem zweiphasigen Fluid mit einer flüssigen und einer festen Phase in hinreichend homogener Mischung, um direkt gepumpt (41, 42) zu werden;
b) ein Mittel zum Erzeugen von Kälte mit zumindest einer Kühlschleife (21, 22), die einen Kompressor (51, 52) für das Kältemittel in gasförmiger Phase, ein Kondensationsmittel (61, 62) für das komprimierte Kältemittel sowie ein Mittel zum Austauschen von Wärme zwischen dem kondensierten Kältemittel und dem in dem Hauptaustauscher (1) enthaltenen Wärmeübertragungsfluid aufweist, wobei der Kompressor (51, 52) das verdampfte Kältemittel ansaugt;

c) einen geschlossenen Hauptkreislauf (3) mit freier kontinuierlicher Zirkulation des Wärmeübertragungsfluids, der den Hauptaustauscher (1) einschließt oder von diesem abzweigt, und der zumindest eine Hauptumwälzpumpe (41, 42) für das Wärmeübertragungsfluid aufweist, wobei der Kreislauf einen etwa konstanten Durchgangsquerschnitt von einem Ende des Kreislaufs zu dem anderen aufweist;

d) zumindest eine Schleife (7 bis 11) zum Abzapfen von Wärmeübertragungsfluid, mit einer angeschlossenen Umwälzpumpe (71, 81, 91, 101, 111) für das Wärmeübertragungsfluid, wobei das Absaugen und das Rückführen mit ein und demselben Abschnitt des Hauptkreislaufs (3) in Verbindung stehend erfolgt, sowie mit zumindest einem zweiten Wärmeaustauscher (72, 82, 92, 102, 112) mit einer Wärme- und/oder Kältequelle zur Verwertung des Wärmeübertragungsfluids, der in die Abzapfschleife eingeschlossen oder davon abgezweigt ist;

**dadurch gekennzeichnet,** daß der mit der zweiphasigen Form des Wärmeübertragungsfluids kompatible Durchgangsquerschnitt des Hauptkreislaufs (3), die maximale Kühlleistung des Mittels zum Erzeugen von Kälte, $P_{max}$, in W ausgedrückt, und der Hauptwärmeaustauscher (1) aneinander angepasste Abmessungen aufweisen, um während des Kühlbetriebs annäherungsweise die Gleichung :

$$P_{max} = d \times c \times \Delta t$$

zu erfüllen, in der:

- d der Mengendurchfluß des Wärmeübertragungsfluids in flüssiger Form, ausgedrückt in kg/s, ist, das den gesamten Durchgangsquerschnitt des Hauptkreislaufs (3) für die Wärmeübertragung ausfüllt;

- c die spezifische Wärme des Wärmeübertragungsfluids in flüssiger Form, ausgedrückt in J/kg/°K, ist; und

- $\Delta T$ die Temperaturdifferenz des Wärmeübertragungsfluids in flüssiger Form zwischen zwischen dem Ausgang und dem Eingang des Hauptaustauschers (1) ist.

2. Vorrichtung nach Anspruch 1, dadurch gekennzeichnet, daß das Mittel zum Erzeugen von Kälte zwei unabhängige und parallele Kühlschleifen (21, 22) aufweist, und zwar mit jeweils zwei gegebenenfalls in dem gleichen Kondensor vereinigten Kondensationsmitteln (61, 62) und zwei Mitteln zum Austauschen von Wärme, jedes zwischen dem Wärmeübertragungsfluid (3) und dem Kältemittel (21, 22), die in dem gleichen Hauptaustauscher (1) vereinigt sind und zwei jeweils verschiedenen Durchlässen folgen.

3. Vorrichtung nach Anspruch 1, dadurch gekennzeichnet, daß zumindest eine Kühlschleife (21, 22) ein zwischengeschaltetes Speicherreservoir (121, 122) für das kondensierte Kältemittel aufweist, das mit Mitteln zur Regelung eines Kompressors (51, 52) verbunden ist, und das eine vertikal oder bezüglich der Vertikalen geneigt angeordnete Steuerleitung (131, 132), die parallel von dem Reservoir abgezweigt ist, sowie einen beweglichen Schwimmer (14) im Inneren der Leitung aufweist, der der Höhe des Kältemittels in der Leitung folgt, wobei die Leitung ein physikalisches Mittel (15) zum Messen und für den Schwimmer zumindest einen Detektor (16) enthält, der an der Außenseite der Steuerleitung angeordnet ist, und dessen Ausgangssignal der Regelung des Kompressors dient.

4. Vorrichtung nach Anspruch 1, dadurch gekennzeichnet, daß eine insbesondere zur Kühlung eines abgeschlossenen Bereichs vorgesehene Schleife (8) zum Abzapfen des Wärmeübertragungsfluids folgendes aufweist:

- einen stromaufwärtigen Arm (84) und einen stromabwärtigen Arm (85) zu beiden Seiten des zweiten Austauschers (82), wobei die angeschlossene Pumpe (81) sich in einem der Arme befindet;

- einen Nebenschlußarm (86) zwischen dem stromaufwärtigen und dem stromabwärtigen Arm, mit einem Vorwärmer (87) in dem erstgenannten Arm;

- ein Schließventil (88) im Bereich des stromabwärtigen Arms, und zwar stromabwärts der Verbindung zwischen dem Nebenschlußarm (86) und dem stromabwärtigen Arm (85);

- ein Sperrventil (89), das stromaufwärts des Vorwärmers in dem Nebenschlußarm angeordnet ist und für den Durchfluß des Wärmeübertragungsfluids nur dann sorgt, wenn das Schließventil (88) geschlossen ist.

5. Vorrichtung nach Anspruch 1, dadurch gekennzeichnet, daß eine insbesondere für die geregelte Kühlung eines abgeschlossenen Bereichs vorgesehene Schleife (9) zum Abzapfen des Wärmeübertragungsfluids folgendes aufweist:

- einen stromaufwärtigen Arm (94) und einen stromabwärtigen Arm (95) zu beiden Seiten des zweiten Austauschers (92), wobei sich die angeschlossene Pumpe (91) in einem dieser Arme befindet;

- einen Nebenschlußarm (96) zwischen dem stromaufwärtigen und dem stromabwärtigen Arm mit einem steuerbaren Nebenschlußventil (97) in dem genannten Arm.

6. Vorrichtung nach Anspruch 1, dadurch gekennzeichnet, daß eine Schleife (10, 11) zum Anzapfen des Wärmeübertragungsfluids kaskadenartig mit einem Kreislauf (17) zur Kühlung bei negativen Temperaturen verbunden ist, die einen Kompressor (171), einen in dem zweiten Austauscher (102, 112) enthaltenen Kondensor (172), ein Druckreduzierventil (173) und einen Verdampfer (174) aufweist.

7. Vorrichtung nach Anspruch 6, dadurch gekennzeichnet, daß daß der Kreislauf (17) zur Kühlung bei negativen Temperaturen ein Sperrventil (175) aufweist, das jeglichen Rückfluß des Kältemittels zu dem Kondensor (172) verhindert.

8. Vorrichtung nach Anspruch 1, dadurch gekennzeichnet, daß der Kreislauf (17) zur Kühlung bei negativen Temperaturen Mittel (18, 19, 20, 23, 25, 26) zum Umkehren der Zirkulation des Kältemittels aufweist, die es dem Verdampfer (174) erlauben, als Kondensor zu wirken, und die es dem Kondensor (172) erlauben, als Verdampfer zu wirken, und zwar unter Austausch von Wärme mit dem Wärmeübertragungsfluid (3).

9. Vorrichtung nach Anspruch 1, dadurch gekennzeichnet, daß der Kreislauf (3) für die Zirkulation des Wärmeübertragungsfluides einen Entgaser/ Dekantierer (47) aufweist, der vorzugsweise stromaufwärts des Hauptaustauschers (1) angeordnet ist, und der ein Reservoir (49) mit vertikaler Ausdehnung mit einem bis zu einer mittleren Höhe des Reservoirs eintauchenden Einlaßrohr (50) für das Wärmeübertragungsfluid, eine Entnahme (53) für das Fluid unterhalb des Endes des Einlaßrohres, ein unteres Ventil (55) zum Entnehmen von Feststoffen und ein oberes Ventil (54) zum Abziehen von Schlämmen aufweist.

10. Vorrichtung nach Anspruch 1, dadurch gekennzeichnet, daß der Hauptkreislauf (3), insbesondere der Entgaser/Dekantierer (47) mit einer Volumeneinstellung (48) zur Einstellung des Wärmeübertragungsfluids verbunden ist.

11. Vorrichtung nach Anspruch 1, dadurch gekennzeichnet, daß sie mehrere Abzapfschleifen (7) aufweist, wobei die einen (7 A bis 7D) Kälte und/oder Wärme erzeugen, und die anderen (7a bis 7k) Kälte und/oder Wärme verbrauchen.

12. Vorrichtung nach Anspruch 1, dadurch gekennzeichnet, daß in der gleichen Abzapfschleife (7e) im Nebenschluß Quellen für Kälte (7eA bis 7eC) und/oder Wärme (7ea und 7eb) abgezweigt sind.

13. Vorrichtung nach Anspruch 1, dadurch gekennzeichnet, daß zwei Temperaturfühler (31, 32) jeweils mit dem Eingang und dem Ausgang einer Abzapfschleife (7e) verbunden sind, um die Menge an Kälte und/oder Wärme zu bestimmen, die aus dem Hauptkreislauf (3) entnommen wird.

14. Vorrichtung nach Anspruch 1, dadurch gekennzeichnet, daß eine insbesondere zur Kühlung eines abgeschlossenen Bereichs vorgesehene Schleife (8) zum Abzapfen des Wärmeübertragungsfluids folgendes aufweist:

- einen stromaufwärtigen Arm (74) und einen stromabwärtigen Arm (75) jeweils zu beiden Seiten des zweiten Austauschers (72), wobei sich eine angeschlossene Pumpe (71) in einem dieser Arme befindet;

- die stromabwärtige Abzweigung des stromabwärtigen Armes (75) liegt, bezüglich der Richtung der Zirkulation des Wärmeübertragungsfluides, stromaufwärts der stromaufwärtigen Abzweigung des stromaufwärtigen Arms (74);

- ein Rückflußsperrventil (76), das in der Abzapfschleife, insbesondere an deren stromabwärtigem Arm (75) angeordnet ist und jegliches Strömen des Wärmeübertragungsfluides von dem stromabwärtigen Arm (75) zum stromaufwärtigen Arm (74) verhindert.

15. Verfahren zum Entfrosten einer Vorrichtung nach Anspruch 1, die eine Vielzahl von Abzapfschleifen (7 bis 11) aufweist, welche entlang des Hauptkreislaufs entsprechend der Höhe der Betriebstemperaturen ihrer zweiten Austauscher (72, 82, 92, 102, 112), die jeweils von dem kalten Ende bis zu dem warmen Ende des Hauptaustauschers (1) ansteigen, verteilt und abgestuft sind, dadurch gekennzeichnet, daß:

- das Mittel zur Erzeugung von Kälte angehalten wird;
- die Pumpen (71, 81, 91, 101, 111) der Abzapfschleifen in Arbeitsbetrieb in Gang gesetzt werden;
- und die Spülung der Abzapfschleifen in der Anordnung ihrer Abstufung von dem kalten Ende zu dem warmen Ende des Hauptaustauschers nacheinander angehalten wird, und zwar in dem Maße, wie die Temperatur des Wärmeübertragungsfluid ansteigt.

## Claims

1. Unit for distributing and/or collecting cold and/or heat, including:

   a) a main exchanger (1) of heat between, on the one hand, a refrigerant fluid (2, 21, 22) in the course of vaporization and, on the other hand, a heat transfer fluid (3) especially a two-phase fluid including a liquid phase and a solid phase, as a mixture which is sufficiently homogeneous to be pumped directly (41, 42);
   (b) a means for producing cold, including at least one refrigeration loop (21, 22) including a compressor (51, 52) for the refrigerant fluid in gaseous phase, a means for condensing (61, 62) the compressed refrigerant fluid, a means for heat exchange between the condensed refrigerant fluid and the heat transfer fluid, included in the main exchanger (1), the compressor (51, 52) drawing in the vaporized refrigerant fluid;
   (c) a closed main circuit (3) for continuous free circulation of the heat transfer fluid, enclosing or connected to the main exchanger (1), including at least one main circulation pump (41, 42) for said heat transfer fluid, said circuit exhibiting an appreciably uniform flow cross-section from one end to the other of said circuit;
   (d) at least one drawing loop (7 to 11) for the heat transfer fluid, including an additional pump (71, 81, 91, 101, 111) for circulating said heat transfer fluid, the suction and the delivery of which communicate with the same section of the main circuit (3), and at least one secondary heat exchanger (72, 82, 92, 102, 112), with a hot and/or cold source, for the utilization of the heat transfer fluid, enclosed in or connected to the drawing loop;

   characterized in that the flow cross-section of the main circuit (3), compatible with the two-phase form of the heat transfer fluid, the maximum refrigeration power of the means for producing cold, Pmax, expressed in W, and the main heat exchanger (1) are sized relative to one another in order to satisfy, in cold operation, approximately the relationship:

   $$P_{Max} = f_m \; x \; c \; x \; \Delta T$$

   in which:

   - $f_m$ is the mass flow rate of the heat transfer fluid, in liquid form, expressed in kg/s, occupying the whole flow cross-section of the main heat transfer circuit (3);
   - c is the mass heat of the heat transfer fluid, in liquid form, expressed in J/kg/°K;
   - $\Delta T$ is the difference in temperature of the heat transfer fluid, in liquid form, between the exit and the entry of the main exchanger (1).

2. Unit according to claim 1, characterized in that the means for producing cold includes two refrigeration loops (21, 22), independent and parallel, with two condensation means (61, 62) respectively, optionally assembled in the same single condenser, and two means for heat exchange, each between the heat transfer fluid (3) and the refrigerant fluid (21, 22), assembled in the same main exchanger (1), along two respectively separate passages.

3. Unit according to claim 1, characterized in that at least one refrigeration loop (21, 22) includes an intermediate storage vessel (121, 122) for the condensed refrigerant fluid, associated with means for controlling the compressor (51, 52), including a control conduit (131, 132) arranged vertically or inclined in relation to the vertical, connected in parallel to said storage vessel, a float (14) movable inside the conduit while following the level of the refrigerant fluid in the latter, comprising a physical means (15) of detection, and at least one float-detector (16) situated outside the control conduit, the output signal of which is used for controlling the compressor.

4. Unit according to claim 1, characterized in that a heat transfer fluid drawing loop (8), especially for the cooling of an enclosure, includes:

   - an upstream leg (84) and a downstream leg (85), on either side of the secondary exchanger (82), with the added pump (81) in one of these legs;
   - a bypass leg (86) between the upstream and downstream legs, with a heater (87) in said leg;
   - a stop valve (88) in the part of the downstream leg downstream of the junction between the bypass leg (86) and the downstream leg (85);
   - a valve (89) situated in the bypass leg, upstream of the heater, ensuring the flow of the heat transfer fluid only when the stop valve (88) is closed.

5. Unit according to claim 1, characterized in that a heat transfer fluid drawing loop (9), especially for the controlled refrigeration of an enclosure, includes:

   - an upstream leg (94) and a downstream leg (95), on either side of the secondary exchanger (92), with the added pump (91) in one of these legs;

- a bypass leg (96) between the upstream and downstream legs, with a controlled bypass valve (97) in said leg.

6. Unit according to claim 1, characterized in that a heat transfer fluid drawing loop (10, 11) is associated in cascade with a subzero refrigeration circuit (17) including a compressor (171), a condenser (172) included in the secondary exchanger (102, 112), a pressure reducer (173) and an evaporator (174).

7. Unit according to claim 6, characterized in that the subzero refrigeration circuit (17) includes a valve (175) preventing any return of refrigerant fluid toward the condenser (172).

8. Unit according to claim 6, characterized in that the subzero refrigeration circuit (17) includes means (18, 19, 20, 23, 25, 26) for reversing the circulation of the refrigerant fluid, enabling the evaporator (174) to operate as a condenser, and the condenser (172) to operate as an evaporator, in heat exchange with the heat transfer fluid (3).

9. Unit according to claim 1, characterized in that the heat transfer fluid circulation circuit (3) includes a degasser-separator (47), arranged preferentially upstream of the main exchanger (1), including a storage vessel (49) oriented vertically, with a heat transfer fluid delivery pipe (50) immersed as far as an intermediate level of the storage vessel, an extraction (53) for said fluid below the end of the delivery pipe, a lower valve (55) for draining off solids and an upper valve (54) for extracting sludge.

10. Unit according to claim 1, characterized in that the main circuit (3) and especially the degasser-separator (47), communicate with a balancing capacity (48) for the heat transfer fluid.

11. Unit according to claim 1, characterized in that it includes a number of drawing loops (7), some (7A to 7D) generating cold and/or heat, and others (7a to 7k) consuming cold and/or heat.

12. Unit according to claim 1, characterized in that sources of cold (7eA to 7eC) and/or of heat (7ea and 7eb) are connected as bypass to the same drawing loop (7e),

13. Unit according to claim 1, characterized in that two temperature sensors (31, 32) are associated with the entry and the exit of a drawing loop (7e) respectively, in order to determine the quantity of cold and/or heat removed from the main heat transfer circuit (3).

14. Unit according to claim 1, characterized in that a heat transfer fluid drawing loop (8), especially for the refrigeration of an enclosure, includes:

- an upstream leg (74) and a downstream leg (75), on either side of the secondary exchanger (72), with the supplementary pump (71) in one of these legs;
- the downstream connection of the downstream leg (75) being situated upstream of the upstream connection of the upstream leg (74), according to the direction of travel of the heat transfer fluid;
- a nonreturn valve (76) arranged in the drawing loop, especially in its downstream leg (75), prohibiting any flow of the heat transfer fluid from the downstream leg (75) toward the upstream leg (74).

15. Process for defrosting a unit according to claim 1, including a plurality of drawing loops (7 to 11) which are distributed and arranged in stages along the main circuit, according to the operating temperature levels of their secondary exchangers (72, 82, 92, 102, 112), increasing respectively from the cold end to the hot end of the main exchanger (1), characterized in that:

- the means for producing cold are stopped;
- the pumps (71, 81, 91, 101, 111) of the drawing loops are operated with forced circulation;
- and the ventilation of the drawing loops is stopped successively in the order of their stagewise arrangement from the cold end to the hot end of the main exchanger, in step with the rise in temperature of the heat transfer fluid.

FIG 1

FIG 2

EP 0 670 462 B1

FIG 3

FIG 4

FIG 5